# EUROPEAN PATENT SPECIFICATION

(11) **EP 3 505 789 B1**
(45) Date of publication and mention of the grant of the patent: **15.04.2020**
(21) Application number: 17843284.5
(22) Date of filing: 21.07.2017
(51) Int. Cl.: F16F 15/08, B60K 5/12, F16F 7/00, F16F 7/12, F16F 1/38

(54) **TORQUE ROD**
DREHMOMENTSTANGE
BIELLE DE TORSION

(30) Priority: 25.08.2016 JP 2016164884
(43) Date of publication of application: 03.07.2019
(73) Proprietor: Bridgestone Corporation, Tokyo 104-8340 (JP)
(72) Inventor: OHASHI, Masaaki, Tokyo 104-8340 (JP); EBARA, Toru, Tokyo 104-8340 (JP)
(74) Representative: Oxley, Robin John George
(86) International application number: PCT/JP2017/026549
(87) International publication number: WO 2018/037798

(56) References cited:
- GB-A- 2 412 150
- JP-A- 2005 265 123
- JP-A- 2007 069 742
- JP-A- 2009 002 417
- JP-A- 2012 197 876
- JP-A- 2012 197 876
- US-A1- 2008 315 473

## Description

### TECHNICAL FIELD

The present disclosure relates to a torque rod.

### BACKGROUND

A conventional torque rod that constitutes a power unit mount for suspending (mounting) a power unit of a vehicle on a vehicle body and stops or controls the swinging of the power unit which occurs when starting or stopping the vehicle is disclosed in, for example, JP 2012-197876 A (PTL 1).

This torque rod includes: a first annular portion connected to the power unit side; a second annular portion connected to the vehicle body side; a connection stay portion connecting the first annular portion and the second annular portion in an intersecting state via a cavity formed by an upper branch portion and a lower branch portion; and a projection portion projecting along the axial direction of the first annular portion on the first annular portion side of the connection stay portion. For example, the torque rod is placed in the vehicle so that the upper branch portion and the lower branch portion align in the vehicle up-down direction and the extending direction of the connection stay portion corresponds to the vehicle front-back direction.

By such arrangement of the torque rod, in the case of input of a load in the vehicle front-back direction in normal time such as when starting or stopping the vehicle, the strength is secured to maintain the suspension state. Meanwhile, in the case of input of a large shock load at an angle with respect to the vehicle front-back direction due to a collision of the vehicle or the like, the lower branch portion breaks so that the power unit falls downward (toward the road) from inside the engine room. It is thus possible to effectively prevent the power unit and its peripheral structures from moving to the vehicle inside upon input of a large shock load at the time of a collision of the vehicle or the like.

In the torque rod, the connection stay portion is provided with the projection portion, to deliver different strength performance depending on the load input angle. In detail, upon normal input in which a load is input in parallel with the torque rod, sufficient torque rod strength is secured. Upon collision input in which a load is input at an angle, the input is concentrated at the projection portion to facilitate breakage of the torque rod from the projection portion as the starting point. Reference is also made to GB 2412150 A and US 2008/315473 A1.

### CITATION LIST

### Patent Literature

PTL 1: JP 2012-197876 A

### SUMMARY

### (Technical Problem)

However, in the case where the power unit suspended using the power unit mount is a heavy power unit with a high displacement, higher input load condition upon normal load input is required of the torque rod constituting the power unit mount.

To secure sufficient strength of the torque rod upon normal load input even in such a situation where higher input load condition upon normal load input is required and also to facilitate breakage of the torque rod upon collision load input, the difference between the strength upon normal load input and the strength upon collision load input in the torque rod needs to be increased.

It could be helpful to provide a torque rod that has a greater difference between the strength upon normal load input and the strength upon collision load input and thus can secure sufficient strength upon normal load input and break easily upon collision load input.

### (Solution to Problem)

A torque rod according to the present disclosure comprises: a first annular portion elastically connected to a first attachment member located on an inner circumferential side of the first annular portion, the first attachment member being to be connected to a power unit; a second annular portion elastically connected to a second attachment member located on an inner circumferential side of the second annular portion, the second attachment member being to be connected to a vehicle; a connection stay portion extending radially outward from an outer circumferential part of the second annular portion and connecting with an outer circumferential part of the first annular portion, and including an upper branch portion that connects with an upper part of the first annular portion and a lower branch portion that has lower bending strength than the upper branch portion and connects with a lower part of the first annular portion; a wall portion connecting with the first annular portion and the connection stay portion, and forming a cavity to which part of the first annular portion is exposed; and a projection portion projecting in an axial direction of the first annular portion from a site of the first annular portion exposed to the cavity, characterized in that the wall portion is located on an opposite side of an axial center position of the first annular portion from the projection portion.

### (Advantageous Effect)

The torque rod according to the present disclosure has a greater difference between the strength upon normal load input and the strength upon collision load input and thus can secure sufficient strength upon normal load input and break easily upon collision load input.

### BRIEF DESCRIPTION OF THE DRAWINGS

In the accompanying drawings:
FIG. 1 is a plan view of a torque rod according to one of the disclosed embodiments;
FIG. 2 is a side view of the torque rod in FIG. 1; and
FIG. 3 is a sectional view along line I-I in FIG. 2.

### DETAILED DESCRIPTION

A preferred mode for carrying out the disclosed techniques will be described below, with reference to drawings.

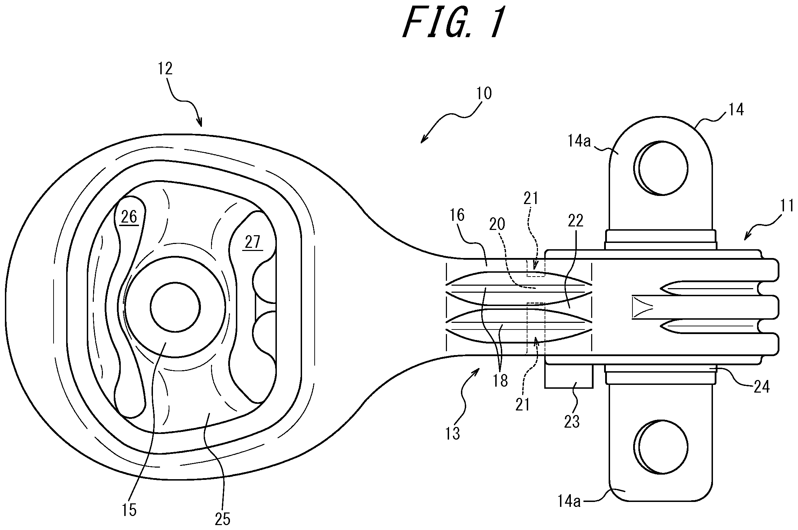

As illustrated in FIGS. 1 to 3, a torque rod 10 according to this embodiment includes a first annular portion 11, a second annular portion 12, and a connection stay portion 13. The first annular portion 11 and the second annular portion 12 are connected by the connection stay portion 13 in a state in which their axial directions are different (their axial directions are approximately orthogonal to each other in this embodiment). For example, the torque rod 10 constitutes a power unit mount for suspending (mounting) a power unit (not illustrated) of a vehicle on a vehicle body, and functions as an anti-vibration support mechanism of the power unit for the vehicle body.

The first annular portion 11 and the second annular portion 12 are both shaped approximately as a circular ring, with an axially projecting stepped portion at its center. In this embodiment, the second annular portion 12 has a larger diameter than the first annular portion 11, and the first annular portion 11, the second annular portion 12, and the connection stay portion 13 are integrally formed of synthetic resin.

On the inner circumferential side of the first annular portion 11, a first attachment member 14 to be connected to the power unit is elastically connected to the first annular portion 11. On the inner circumferential side of the second annular portion 12, a second attachment member 15 to be connected to the vehicle body is elastically connected to the second annular portion 12. The first attachment member 14 has flat plate portions 14a at both ends, as the part of connection to the power unit. The second attachment member 15 has an insertion hole as the part of connection to the vehicle body.

In this embodiment, the torque rod 10 is attached to the vehicle with the axial direction of the first annular portion 11 and the axial direction of the second annular portion 12 being orthogonal to each other when viewed from the extending direction of the connection stay portion 13 so that the axial direction of the second annular portion 12 corresponds to the vehicle up-down direction, the axial direction of the first annular portion 11 corresponds to the vehicle width direction, and the extending direction of the connection stay portion 13 (the right-left direction in FIGS. 1 to 3) corresponds to the vehicle front-back direction. The attachment of the torque rod 10 to the vehicle is, however, not limited to this. For example, the torque rod 10 may be attached to the vehicle so that the axial direction of the second annular portion 12 corresponds to the vehicle width direction and the axial direction of the first annular portion 11 corresponds to the vehicle up-down direction.

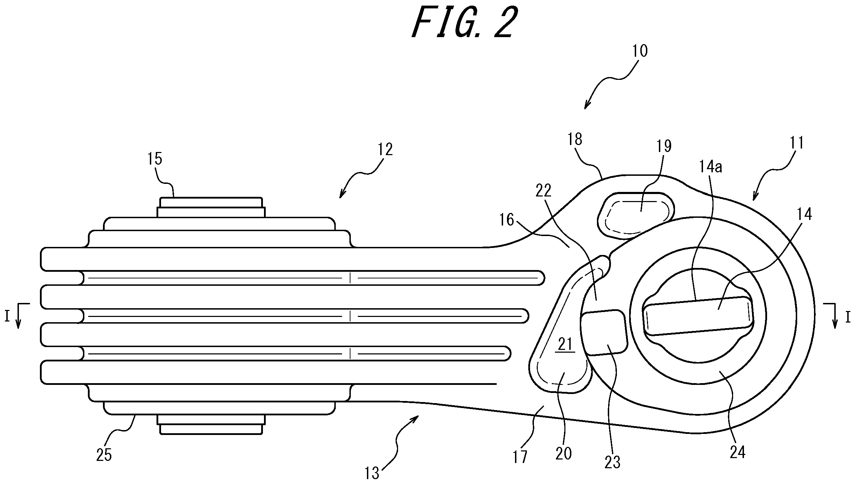

The connection stay portion 13 includes an upper branch portion 16 and a lower branch portion 17 that extend radially outward from the outer circumferential part of the second annular portion 12 and connect with the outer circumferential part of the first annular portion 11. The upper branch portion 16 connects with the upper part of the first annular portion 11, and the lower branch portion 17 connects with the lower part of the first annular portion 11 (see FIG. 2).

The lower branch portion 17 has lower bending strength than the upper branch portion 16. In this embodiment, the lower branch portion 17 is thinner than the upper branch portion 16. In other words, the upper branch portion 16 has higher bending strength than the lower branch portion 17, and is thicker than the lower branch portion 17. Specifically, the upper branch portion 16 has a larger diameter than the outer diameter of the first annular portion 11 especially in the site connecting with the first annular portion 11. In addition, the upper branch portion 16 is reinforced by ribs 18 (see FIGS. 1 and 2). The upper branch portion 16 not only has higher bending strength than the lower branch portion 17, but also has higher compression strength upon load input to the first attachment member 14 than the lower branch portion 17. Thus, the bending strength differs greatly between the upper branch portion 16 and the lower branch portion 17. Given that the upper branch portion 16 is thick, a recess 19 may be formed as appropriate in a side portion of the upper branch portion 16 for weight reduction and the like.

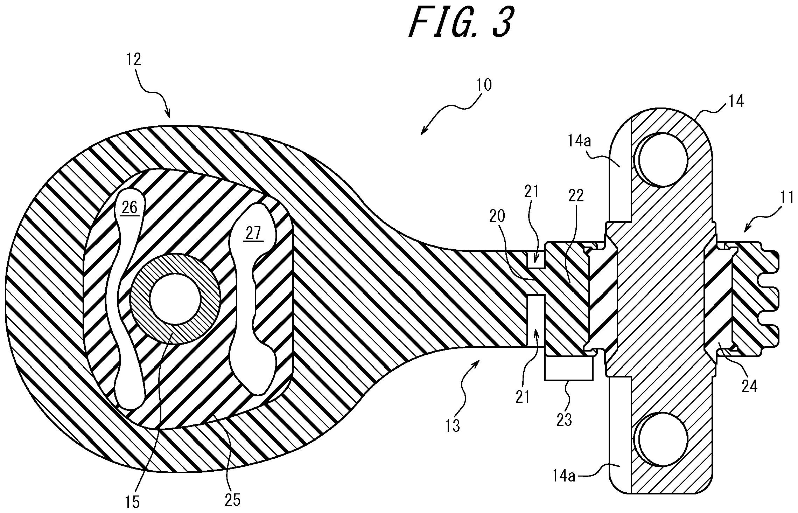

A wall portion 20 that connects with the first annular portion 11 and the connection stay portion 13 and is integrally formed of synthetic resin with the upper branch portion 16 and the lower branch portion 17 in this embodiment is provided between the upper branch portion 16 and the lower branch portion 17 of the connection stay portion 13 (see FIGS. 2 and 3). As a result of providing the wall portion 20 connecting the first annular portion 11 and the connection stay portion 13, the first annular portion 11 and the second annular portion 12 communicate with each other via the wall portion 20 in the connection stay portion 13. This wall portion 20 forms a cavity 21 to which part of the first annular portion 11 is exposed, on both sides of the wall portion 20 (see FIGS. 2 and 3). The cavity 21 is surrounded by the upper branch portion 16, the lower branch portion 17, the part of the connection stay portion 13 other than the upper branch portion 16 and the lower branch portion 17, and the first annular portion 11, and is a non-through hole in the axial direction of the first annular portion 11.

The thickness of the wall portion 20 is thinner than the thickness of the first annular portion 11 in the axial direction of the first annular portion 11, and is located on the opposite side of the axial center position of the first annular portion 11 from the below-described projection portion 23. In detail, the position of the wall portion 20 is shifted from the axial center position of the first annular portion 11 so as to be away from the projection portion 23 (see FIG. 3). By shifting the position of the wall portion 20 from the axial center position of the first annular portion 11, the difference between the strength upon normal load input and the strength upon collision load input can be increased. Shifting the position of the wall portion 20 to increase its distance from the projection portion 23 facilitates breakage of the wall portion 20.

A site 22 of the first annular portion 11 exposed to the cavity 21 is a site whose thickness in the vehicle front-back direction as the load input direction is the thinnest, between the first attachment member 14 and the second attachment member 15.

The projection portion 23 projects in the axial direction of the first annular portion 11 from the site 22 of the first annular portion 11 exposed to the cavity 21 (see FIGS. 1 and 2). The projection portion 23 projects in a direction intersecting (e.g. orthogonal to) the vehicle front-back direction, i.e. the direction of load input to the first attachment member 14 by acceleration, deceleration, collision, or the like, in FIG. 3.

The load input angle is different between normal input and collision input. The normal input angle corresponds to a direction of input (normal input) from the vehicle during normal running, which is typically along the vehicle front-back direction associated with, for example, acceleration and deceleration of the vehicle. The collision input angle corresponds to a direction of expected input (collision input) from the outside into the vehicle upon a collision of the vehicle, which is typically inclined with respect to the normal input angle in a vehicle plane.

The range of the projection portion 23 in the circumferential direction of the first annular portion 11 is approximately equal to the thickness of the flat plate portions 14a of the first attachment member 14. The projecting amount of the projection portion 23 in the axial direction of the first annular portion 11 is less than such an amount that reaches fastening bolts for attaching the power unit to the flat plate portions 14a. Although the projection portion 23 is provided on only one side in the axial direction of the first annular portion 11 as an example, this is not a limitation, and the projection portion 23 may be provided on both sides in the axial direction.

The first attachment member 14 is, for example, a shaft member made of metal, and is located on the inner circumferential side of the first annular portion 11. Specifically, the first attachment member 14 is inserted through the first annular portion 11. The first attachment member 14 is fixed to the power unit by, for example, inserting bolts through the through holes of both flat plate portions 14a and fastening the bolts to an end of the power unit.

The second attachment member 15 is, for example, a cylindrical member made of metal, and is fastened to the vehicle body via, for example, a bolt inserted through the insertion hole.

A first rubber elastic body 24 elastically connecting the first annular portion 11 and the first attachment member 14 is provided between the first annular portion 11 and the first attachment member 14. For example, the first rubber elastic body 24 is vulcanization-adhered to the outer circumferential surface of a central portion of the first attachment member 14, and also vulcanization-adhered to the inner circumferential surface of the first annular portion 11.

A second rubber elastic body 25 elastically connecting the second annular portion 12 and the second attachment member 15 is provided between the second annular portion 12 and the second attachment member 15. For example, the second rubber elastic body 25 is vulcanization-adhered to the outer circumferential surface of the second attachment member 15, and also vulcanization-adhered to the inner circumferential surface of the second annular portion 12.

On both sides of the second attachment member 15 in the extending direction of the connection stay portion 13 (the right-left direction in FIGS. 1 to 3), bored portions 26 and 27 are formed through the second rubber elastic body 25 along the axial direction of the second attachment member 15 (see FIGS. 1 and 3).

The functions of the torque rod 10 according to this embodiment with the above-described structure will be described below.

The torque rod 10 according to this embodiment is installed between an end of the power unit (not illustrated) and the vehicle body (not illustrated) and used. The torque rod 10 can elastically restrict displacement of the power unit in the roll direction, the vehicle front-back direction, or the like due to the torque reaction force or inertial force of the power unit.

Moreover, in the case where the second annular portion 12 is displaced in the extending direction of the connection stay portion 13 by at least a predetermined amount relative to the second attachment member 15, the inner wall surfaces of the bored portions 26 and 27 come into contact with each other, thus restricting any more relative displacement.

In particular, in the torque rod 10 according to this embodiment, the first annular portion 11 and the connection stay portion 13 communicate via the wall portion 20 (see FIG. 2), and the first annular portion 11 and the second annular portion 12 are integrated by the wall portion 20 in the connection stay portion 13. The restriction force against the load input to the torque rod 10 can thus be further enhanced.

In detail, higher load input can be withstood than in the case where, for example, there is a space between the first annular portion 11 and the connection stay portion 13 without the wall portion 20, with it being possible to enhance the restriction force against the load required of the torque rod. Hence, the torque rod 10 can sufficiently function as the power unit mount even in the case where the power unit suspended using the power unit mount is a heavy power unit with a high displacement.

Upon a collision of the vehicle, at least a predetermined load is input from the power unit to the first attachment member 14 in the torque rod 10, and the input load is further transferred from the first attachment member 14 to the first annular portion 11. Here, stress concentration tends to occur in the site 22 of the first annular portion 11 that is exposed to the cavity 21 between the upper branch portion 16 and the lower branch portion 17 of the connection stay portion 13 and has the projection portion 23.

The projection portion 23 projects, for example, in a direction intersecting the flat plate portions 14a, i.e. the direction of load input to the first attachment member 14. Moreover, the collision load input direction is diagonal to the vehicle front-back direction. Accordingly, upon input of at least a predetermined load to the first attachment member 14, the first rubber elastic body 24 deforms elastically and as a result the first attachment member 14 (the side surface adjacent to the flat plate portion 14a) promptly comes into contact with the projection portion 23.

Thus, the load input to the first attachment member 14 concentrates at the projection portion 23 quickly, causing significant stress concentration in the site 22 of the first annular portion 11. This further ensures that the first annular portion 11 breaks from the site 22 as the starting point.

The first annular portion 11 and the connection stay portion 13 communicate via the wall portion 20 and are integrated. The wall portion 20 is thinner than the thickness of the first annular portion 11 in the axial direction, and has lower breaking resistance than the part around the wall portion 20. Hence, the wall portion 20 can break with breakage of the first annular portion 11.

In addition, in this embodiment, the connection stay portion 13 includes the upper branch portion 16 connected to the upper part of the first annular portion 11 and the lower branch portion 17 connected to the lower part of the first annular portion 11, and the lower branch portion 17 has lower bending strength than the upper branch portion 16 that is further reinforced by the ribs 18. This ensures that the lower branch portion 17 breaks upon input of at least a predetermined load to the first attachment member 14. As a result of the breakage of the lower branch portion 17, the first attachment member 14 moves in the cavity 21 downward to the second attachment member 15 side. Since the first attachment member 14 is connected to the power unit, as a result of the torque rod 10 breaking downward and the first attachment member 14 moving further downward, the power unit can fall downward more reliably.

Thus, in this embodiment, breakage of the torque rod 10 is ensured by the structure in which the bending strength is different between the upper branch portion 16 and the lower branch portion 17 in the connection stay portion 13 and stress concentration is caused in the first annular portion 11 by the site 22 of the first annular portion 11 and the projection portion 23 provided in the site 22.

In other words, the difference between the strength upon normal load input and the strength upon collision load input in the torque rod 10 can be increased to secure sufficient strength of the torque rod 10 upon normal load input even in such a situation where higher input load condition upon normal load input is required because of the use of a heavy power unit with a high displacement and also to facilitate breakage of the torque rod 10 upon collision load input.

As the product specifications of the torque rod 10, the following function is required: Upon collision input, the torque rod 10 breaks at an expected load to cause the power unit (engine) to fall and thus protect people on the vehicle, on the condition that the torque rod 10 does not break upon normal load input to the vehicle. The torque rod 10 accordingly needs to break at at most a load designated depending on the vehicle on which the power unit having the torque rod 10 as a component is mounted. For example, the placement position of the projection portion 23 and the amount of displacement of the wall portion 20 from the axial center position of the first annular portion 11 may be set as appropriate depending on the required input angle.

### (Other embodiments)

Although the first annular portion 11 and the second annular portion 12 are both shaped approximately as a circular ring in the foregoing embodiment, the first annular portion 11 and the second annular portion 12 may be non-circular annular portions used in the field of torque rods. Although the upper branch portion 16 of the connection stay portion 13 is reinforced by the ribs 18 in the foregoing embodiment, the ribs 18 may be omitted as long as the lower branch portion 17 has relatively low bending strength. Although the connection stay portion 13 has a bifurcated structure including the upper branch portion 16 and the lower branch portion 17 in the foregoing embodiment, the connection stay portion 13 may have three or more branch portions as long as the effects according to the present disclosure can be achieved.

Although the projection portion 23 projects in a direction intersecting (e.g. orthogonal to) the direction of load input to the first attachment member 14 by acceleration, deceleration, collision, or the like in the foregoing embodiment, the projection portion 23 may be provided at a position not intersecting with the load input direction.

Although the wall portion 20 occupies the space between the upper branch portion 16 and the lower branch portion 17 of the connection stay portion 13 without any gap in the foregoing embodiment, for example, the wall portion 20 may be partially notched so that the cavities 21 on both sides of the wall portion 20 are open cavities communicating with each other in the axial direction of the first annular portion 11. Moreover, the whole wall portion 20 may have the same thickness, or part of the wall portion 20 may be reduced in thickness. In this way, the difference between the strength upon normal load input and the strength upon collision load input in the torque rod 10 can be adjusted more finely.

### REFERENCE SIGNS LIST

- 10: torque rod
- 11: first annular portion
- 12: second annular portion
- 13: connection stay portion
- 14: first attachment member
- 14a: flat plate portion
- 15: second attachment member
- 16: upper branch portion
- 17: lower branch portion
- 18: rib
- 19: recess
- 20: wall portion
- 21: cavity
- 22: site of first annular portion 11
- 23: projection portion
- 24: first rubber elastic body
- 25: second rubber elastic body
- 26, 27: bored portion

## Claims

1. A torque rod (10) comprising:
a first annular portion (11) elastically connected to a first attachment member (14) located on an inner circumferential side of the first annular portion (11), the first attachment member (14) being to be connected to a power unit;
a second annular portion (12) elastically connected to a second attachment member (15) located on an inner circumferential side of the second annular portion (12), the second attachment member (15) being to be connected to a vehicle;
a connection stay portion (13) extending radially outward from an outer circumferential part of the second annular portion (12) and connecting with an outer circumferential part of the first annular portion (11), and including an upper branch portion (16) that connects with an upper part of the first annular portion (11) and a lower branch portion (17) that has lower bending strength than the upper branch portion (16) and connects with a lower part of the first annular portion (11);
a wall portion (20) connecting with the first annular portion (11) and the connection stay portion (13), and forming a cavity (21) to which part of the first annular portion (11) is exposed; and
a projection portion (23) projecting in an axial direction of the first annular portion (11) from a site (22) of the first annular portion (11) exposed to the cavity (21), **characterized in that**
the wall portion (20) is located on an opposite side of an axial center position of the first annular portion (11) from the projection portion (23).

2. The torque rod (10) according to claim 1, wherein the cavity (21) is a non-through hole in the axial direction of the first annular portion (11).

## Patentansprüche

1. Drehstab (10), der Folgendes umfasst:
einen ersten ringförmigen Abschnitt (11), der elastisch mit einem ersten Befestigungselement (14) verbunden ist, das auf einer inneren Umfangsseite des ersten ringförmigen Abschnitts (11) angeordnet ist, wobei das erste Befestigungselement (14) mit einer Antriebseinheit verbunden werden soll;
einen zweiten ringförmigen Abschnitt (12), der elastisch mit einem zweiten Befestigungselement (15) verbunden ist, das auf einer inneren Umfangsseite des zweiten ringförmigen Abschnitts (12) angeordnet ist, wobei das zweite Befestigungselement (15) mit einem Fahrzeug verbunden werden soll;
einen Verbindungsstrebenabschnitt (13), der sich von einem äußeren Umfangsteil des zweiten ringförmigen Abschnitts (12) in Radialrichtung nach außen erstreckt und sich mit einem äußeren Umfangsteil des ersten ringförmigen Abschnitts (11) verbindet und einen oberen Zweigabschnitt (16), der sich mit einem oberen Teil des ersten ringförmigen Abschnitts (11) verbindet, und einen unteren Zweigabschnitt (17), der eine niedrigere Biegefestigkeit aufweist als der obere Zweigabschnitt (16) und sich mit einem unteren Teil des ersten ringförmigen Abschnitts (11) verbindet, einschließt;
einen Wandabschnitt (20), der sich mit dem ersten ringförmigen Abschnitt (11) und dem Verbindungsstrebenabschnitt (13) verbindet und einen Hohlraum (21) bildet, zu dem ein Teil des ersten ringförmigen Abschnitts (11) freigelegt ist; und
einen Vorsprungsabschnitt (23), der in einer axialen Richtung des ersten ringförmigen Abschnitts (11) von einer Stelle (22) des ersten ringförmigen Abschnitts (11), die zu dem Hohlraum (21) freigelegt ist, vorspringt, **dadurch gekennzeichnet, dass**
der Wandabschnitt (20) auf einer entgegengesetzten Seite einer axialen Mittenposition des ersten ringförmigen Abschnitts (11) von dem Vorsprungsabschnitt (23) angeordnet ist.

2. Drehstab (10) nach Anspruch 1, wobei der Hohlraum (21) ein nicht durchgehendes Loch in der axialen Richtung des ersten ringförmigen Abschnitts (11) ist.

## Revendications

1. Barre de torsion (10), comprenant:
une première partie annulaire (11) connectée de manière élastique à un premier élément de fixation (14) agencé sur un côté circonférentiel interne de la première partie annulaire (11), le premier élément de fixation (14) étant destiné à être connecté à une unité de puissance ;
une deuxième partie annulaire (12) connectée de manière élastique à un deuxième élément de fixation (15) agencé sur un côté circonférentiel interne de la deuxième partie annulaire (12), le deuxième élément de fixation (15) étant destiné à être connecté à un véhicule ;
une partie de support de connexion (13) s'étendant radialement vers l'extérieur d'une partie circonférentielle externe de la deuxième partie annulaire (12) et connectée à une partie circonférentielle externe de la première partie annulaire (11), et incluant une partie de dérivation supérieure (16) connectée à une partie supérieure de la première partie annulaire (11), et une partie de dérivation inférieure (17) présentant une résistance à la flexion inférieure à celle de la partie de dérivation supérieure (16) et connectée à une partie inférieure de la première partie annulaire (11) ;
une partie de paroi (20) connectée à la première partie annulaire (11) et à la partie de support de connexion (13), et formant une cavité (21) à laquelle une partie de la première partie annulaire (11) est exposée ; et
une partie en saillie (23) débordant dans une direction axiale de la première partie annulaire (11) à partir d'un site (22) de la première partie annulaire (11) exposée à la cavité (21), **caractérisée en ce que**
la partie de paroi (20) est agencée sur un côté opposé d'une position centrale axiale de la première partie annulaire (11) par rapport à la partie en saillie (23).

2. Barre de torsion (10) selon la revendication 1, dans laquelle la cavité (21) est constituée par un trou non traversant, dans la direction axiale de la première partie annulaire (11).
